(19) **Europäisches Patentamt**

**European Patent Office**

**Office européen des brevets**

(11) **EP 0 566 773 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int. Cl.$^7$: **H04L 27/24**, H04L 25/49

(21) Anmeldenummer: **92111707.3**

(22) Anmeldetag: **09.07.1992**

(54) **Verfahren und Schaltungsanordnung zur Übertragung von binären Datenfolgen**

Method and apparatus for the transmission of binary data strings

Procédé et dispositif pour la transmission de données binaires

(84) Benannte Vertragsstaaten:
**AT BE CH DE ES FR GB IT LI NL PT SE**

(30) Priorität: **23.04.1992 CH 131592**

(43) Veröffentlichungstag der Anmeldung:
**27.10.1993 Patentblatt 1993/43**

(73) Patentinhaber:
**HÄNI PROLECTRON AG**
**CH-9552 Bronschhofen/Wil (CH)**

(72) Erfinder: **Pfiffner, Peter**
**CH-9500 Wil (CH)**

(74) Vertreter: **Wächter, Roland**
**Siemens Schweiz AG**
**Patente,**
**Postfach**
**8047 Zürich (CH)**

(56) Entgegenhaltungen:
EP-A- 0 344 615          WO-A-91/02403
DE-A- 3 133 397          US-A- 3 560 856
US-A- 4 417 349

- **International Telecommunications Symposium ITS '90, Rio de Janeiro, BR, 03.- 06.09.1990, pages 525-528, IEEE, New York, US; XP245474; J. A. DELGADO-PENIN / A. CORREAS-CORCOBADO: 'Power Spectral Density of a novel Adaptive Multilevel Line Code.'**
- **IEEE JOURNAL OF SOLID-STATE CIRCUITS Bd. 24, Nr. 6 , Dezember 1989 , NEW YORK US Seiten 1614 - 1623 XP100493 R. P. COLBECK ET AL.: 'A Single-Chip 2B1Q U-Interface Transceiver.'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren nach dem Oberbegriff des Patentanspruchs 1 sowie eine Schaltungsanordnung zur Durchführung des Verfahrens nach Anspruch 6 bzw. 7.

Digitale Daten, die von einem Sender zu einem Empfänger zu übertragen sind, werden oft in einer ersten Stufe in ein Niederfrequenzsignal umgewandelt, dessen Frequenz entsprechend den logischen Zuständen des Eingangssignals zwischen den Werten fh und ft (fh > ft) gewechselt bzw. umgetastet wird. Dieses Modulationsverfahren ist als "Frequency Shift Keying" (FSK) bekannt.

Zur Übertragung der digitalen Daten über längere elektrische oder optische Leitungen oder mittels Richtfunk wird in einer weiteren Stufe das (FSK-) modulierte Niederfrequenzsignal einem hochfrequenten Trägerkanal überlagert. Empfangsseitig wird das Hochfrequenzsignal demoduliert. In einer ersten Stufe wird dabei das (FSK-) modulierte Niederfrequenzsignal zurückgewonnen, das in einer Diskriminatorstufe demoduliert wird. In einer letzten Stufe erfolgt normalerweise die Regenerierung der digitalen Daten.

Eine derartige in einem Modem erfolgende Modulation und Demodulation des Niederfrequenzsignals ist z.B. aus P.Bocker, Datenübertragung, München 1976, Band 2, Seiten 30-32 bekannt. Auf Seite 31, Bild 7.10 ist ein frequenzumgetasteter mit einem Schwingkreis versehener Oszillator gezeigt, dessen Resonanzfrequenz in Abhängigkeit der zu übertragenden Daten geändert wird. Auf Seite 32, Bild 7.12 ist ein Demodulator mit Schwingkreisdemodulator dargestellt, der das übertragene Datensignal regeneriert. Auf Seite 31, Bild 7.11 ist der Verlauf der im Modem auftretenden Daten ersichtlich. Das frequenzmodulierte Signal (2) weist für eine logisch "1" der Sendedaten etwa 3,5 und für eine logisch "0" etwa 1,5 Schwingungen der Frequenz fh bzw. ft auf. Die Übertragungs-bzw. Baudrate des Datensignals ist daher etwa 3,5-mal niedriger als die Frequenz fh. Eine hohe Frequenz fh führt dabei zu einem entsprechend hohen Bandbreitebedarf bei der Modulation eines Trägerkanals. Die Übertragungsrate wird daher bei fest vorgegebener Bandbreite auf einen relativ tiefen Wert begrenzt. Durch die Reduktion der Schwingungen pro Datenbit lässt sich die Übertragungsrate entsprechend erhöhen. Falls die Frequenz fh jedoch doppelt so hoch bleibt wie die Frequenz ft so wird für die Übertragung der Datenbits "1" immer die doppelte Bandbreite wie für die Datenbits "0" benötigt. Durch das beschriebene Verfahren ergibt sich im Verhältnis zur benötigten Bandbreite immer eine relativ tiefe Übertragungsrate. Über den Frequenzbereich eines Übertragungssystems ist die Dämpfung oft nicht konstant und die Phase oft nicht linear ansteigend, so dass bei der Übertragung Signalverformungen auftreten. Bei der Verwendung von zwei Frequenzen fh und ft treten dabei Gruppenlaufzeiten auf, die zu Signalverzerrungen führen, wodurch normalerweise eine erhöhte Fehlerrate auftritt. Signalverzerrungen müssen bei diesem Verfahren daher durch aufwendige Entzerrungsvorrichtungen reduziert werden.

Aus der DE-OS 2 008 897 ist ferner ein Verfahren zum Übertragen von binär kodierten Daten auf einem Hochfrequenzkanal bekannt, bei dem die blnäre Kodierung durch eine datenabhängige Umtastung der Trägerfrequenz erfolgt. Für ein Datenbit "0" wird der Träger dabei auf die Frequenz $f1 = f0 + fa$ und für ein Datenbit "1" auf $f2 = f0 - fa$ gesetzt. Durch dieses Verfahren lässt sich eine Übertragungsrate erreichen, die im Vergleich zur eingangs beschriebenen Frequenzumtastung im Basisbandbereich wesentlich höher ist. Funkgeräte, bei denen die Umtastung der Trägerfrequenz vorgesehen ist, erlauben dabei das Zuführen eines zu übertragenden Datensignals in digitaler Form. Zur Durchführung dieser harten Frequenzumtastung sind im Funkgerät jedoch spezielle Massnahmen notwendig, die in handelsüblichen Geraten nicht vorhanden sind. Ferner kann bei dieser Modulationsart eine erhöhte Fehlerrate auftreten, da oft Verschiebungen der Diskriminatorkennlinie auftreten können. Ferner ist das binäre Datensignal dem Modulator über einen Gleichspannungseingang zuzuführen, der gemäss nationalen Vorschriften oft nicht zugelassen ist, um die zugelassenen Frequenzkanäle von Oberwellen freizuhalten, die über derartige Eingänge zugeführt und auf den Trägerkanal moduliert würden.

Aus der DE 31 33 397 A1 ist ein Verfahren bekannt, bei dem in Abhängigkeit der zu übertragenden Daten die Amplitude der Schwingungen eines Signals, das eine konstante Frequenz aufweist, verändert wird (z.B.: Datenbit "1" grosse Amplitude, Datenbit "0" kleine Amplitude). Derartige amplitudenmodulierte Signale sind nicht gleichstromfrei (s. Seite 7, Zeile 17 oder anschaulich z.B. mit Bitmuster "101010101"), wodurch das codierte Signal einer Sendeeinheit nicht über einen Wechselspannungseingang zuführbar ist. Dieses Problem kann gemäss der U.S. Pat. 3,560,856 gelöst werden, indem für die Bitkombinationen "01", "00", "10" und "11" Impulse gewählt werden, deren Polarität jeweils dann geändert wird, wenn der Wert des Signals der integrierten Impulse das Vorzeichen wechselt. Dieses Verfahren ergibt einen erhöhten Aufwand und führt zu einer reduzierten Fehlersicherheit, da sich die empfangsseitig vorgesehene Decodierlogik nicht mehr darauf verlassen kann, dass die Polarität der eintreffenden Impulse alterniert, wodurch z.B. beim Eintreffen von zwei aufeinanderfolgenden Impulsen gleicher Polarität sofort ein Fehler erkannt wird. Aus U.S. Pat. 4,417,349 ist zudem ein Verfahren bekannt, bei dem binäre Datenfolgen nach Formatierung in einem AMI (bipolar alternative mark inversion) - Generator über einen Funkkanal von einer Nachrichtenquelle zu einer Nachrichtensenke übertragen werden. Durch die AMI-Formatierung erfolgt bei der Übertragung eines Datenbits "1" bzw. "0" jeweils ein Polaritätswechsel innerhalb einer Sequenz von abgegebenen Impulsen (U.S. Pat. 4,417,349, Fig. 5). Bei der Übertragung eines Datenbits "0" bzw. "1" wird hingegen kein Impuls abgegeben. Aufgrund der beschriebenen Formatierungsvorschrift wird mit einem Impuls daher jeweils nur ein Datenbit "1" bzw. "0" übertragen.

Der vorliegenden Erfindung liegt daher die Aufgabe zugrunde, ein Verfahren und eine Schaltungsanordnung zu dessen Durchführung zu schaffen, mit dem Datensignale mit einer höheren Übertragungsrate über einen Kanal übertragbar sind.

Diese Aufgabe wird durch die im kennzeichnenden Teil des Patentanspruchs 1 bzw. 6 oder 7 angegebenen Massnahmen gelöst. Vorteilhafte Ausgestaltungen der Erfindung sind in weiteren Ansprüchen angegeben.

Durch das erfindungsgemässe Verfahren wird eine Übertragungsrate erzielt, die doppelt bzw. viermal so hoch ist wie die Frequenz des Signals, mit dem das Trägersignal moduliert wird. Das Verhältnis der Übertragungsrate zur Kanalbandbreite ist daher optimal. Das mit den Binärdaten modulierte Signal weist dabei nur eine einzige Frequenz auf, wodurch durch Gruppenlaufzeiten entstehende Verzerrungen entfallen. Die Fehlerrate wird daher reduziert, ohne dass wie bei den bekannten Verfahren ein Entzerrer verwendet werden müsste. Das Verfahren lässt sich ferner in Verbindung mit herkömmlichen Funkgeräten einsetzen. Funkgeräte, die seit längerer Zeit schon in Betrieb sind, können praktisch ohne zusätzliche Massnahmen mit dem neuen Verfahren betrieben werden. Die Übertragungsrate dieser im Einsatz stehenden Geräte kann bei fest vorgegebener Bandbreite erhöht und die Fehlerrate reduziert werden.

Die erfindungsgemässe Schaltungsanordnung ermöglicht die Modulation und Demodulation eines Basisbandsignals, ist kostengünstig aufgebaut und erlaubt eine optimale Formung der zu übertragenden bzw. eine optimale Auswertung der übertragenen Signale. Fehler, die in herkömmlichen Diskriminatorstufen insbesondere durch auftretende Störsignale entstanden, werden weitgehend eliminiert.

Die Erfindung wird nachfolgend anhand einer Zeichnung beispielsweise näher erläutert. Dabei zeigt:

Fig. 1    die Darstellung verschiedener Signalverläufe
Fig. 2    erfindungsgemässe Modulations- und Demodulationseinheiten (MODEM)
Fig. 3    Signalverläufe in mit Signalprozessoren versehenen Modems

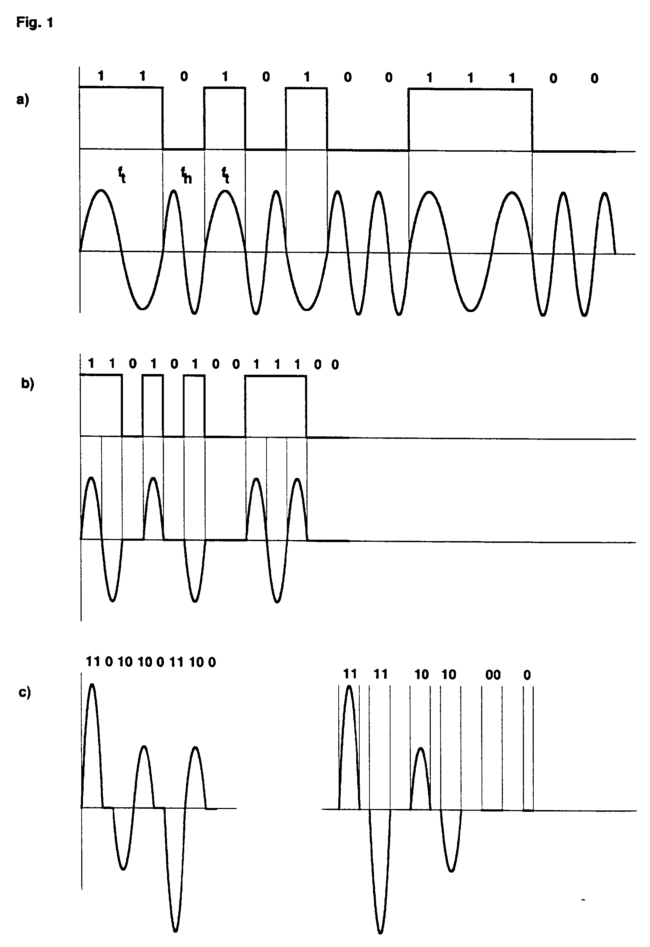

Fig. 1a zeigt den Signalverlauf eines zu übertragenden Datensignals bzw. einer zu übertragenden Bitfolge "1101010011100" sowie ein entsprechend dieser Bitfolge FSK-moduliertes Basisbandsignal, das für Datenbits "1" einen Signalanteil tieferer und für Datenbits "0" einen Signalanteil höherer Frequenz aufweist. Einem Datenbit "1" wird dabei eine Halbwelle einer Frequenz ft und einem Datenbit "0" werden zwei Halbwellen einer Frequenz fh zugeordnet. Falls zum Übertragen eines Datenbits "1" eine Halbwelle genügend ist, so ergibt sich durch die Zuordnung von zwei Halbwellen für die Übertragung eines Datenbits "0" eine Übertragungsrate die offenbar nicht optimal ist. Ferner treten wegen der Verwendung von Signalanteilen unterschiedlicher Frequenz ft bzw. fh Gruppenlaufzeiten auf, die zu Signalverzerrungen führen.

In Fig. 1b wird ein Basisbandsignal wiederum entsprechend der in Fig. 1a gezeigten Bitfolge "1101010011100" gebildet. Einem Datenbit "1" wird dabei jeweils eine positive oder negative Halbwelle z.B. mit der Frequenz fh zugeordnet. Dabei ist vorgesehen, dass von Halbwelle zu Halbwelle ein Polaritätswechsel erfolgt. Den Datenbits "0" ist dabei ein Gleichspannungsanteil von null Volt zugeordnet. Zur Reduktion der Inter-Symbol-Interferenz und von Oberwellen, die durch die relativ "harten" Übergänge zwischen Datenbits "0" und "1" entstehen können, werden anstatt der gezeigten Halbwellen oft Impulse mit einem schmalbandigen Frequenzspektrum angewendet, bei denen ausschliesslich "weiche" Übergänge vorgesehen sind. Die Bandbreite des Übertragungskanals kann damit auf einen relativ kleinen Wert beschränkt werden, ohne dass Impulsverformungen auftreten. Vorzugsweise werden $\cos^2$-förmige Impulse gewählt, die die beschriebenen Anforderungen erfüllen. Das in Fig. 1b gezeigte modulierte Basisbandsignal enthält daher nur Signalanteile der Frequenz fh. Gruppenlaufzeiten und entsprechende Signalverzerrungen entfallen daher. Dadurch erübrigen sich Entzerrerstufen, die bei der in Fig. 1a gezeigten Modulationsart notwendig sind. Ferner ergibt sich dadurch auch eine Reduktion der Fehlerrate bei der Datenübermittlung. Da die Übertragung der Datenbits "0" und "1" nur noch je die Länge einer Halbwelle der Frequenz fh bzw. die Zeit $T = 1 / (2\,fh)$ in Anspruch nimmt ergibt sich eine Verdoppelung der Übertragungsrate im Vergleich zu Fig. 1a. Dabei wird eine Übertragungsrate erreicht, die dem Wert von 2 fh entspricht.

Gemäss Fig. 1c lässt sich die Übertragungsrate jedoch noch weiterer erhöhen. Dabei sind zwei Halbwellen bzw. Impulse unterschiedlicher Amplitude vorgesehen, mit denen das Basisbandsignal entsprechend den Bitkombinationen "11", "10" und "0" bzw. "11", "01" und "0" moduliert wird. Den Bitkombinationen "11" und "10" bzw. "11" und "01" werden dabei die Halbwellen unterschiedlicher Amplitude und dem Bit "0" wird ein Signalanteil von null Volt und der halben Länge einer Halbwelle zugeordnet. Selbstverständlich liessen sich die Dateneinheiten "0" und "1" auch vertauschen. In Fig. 1c ist der Kombination "11" eine Halbwelle mit einer Amplitude 1 und der Kombination "10" eine Halbwelle mit der Amplitude 0,5 zugeordnet. Mit der in Fig. 1c gezeigten Modulationsart lässt sich im Vergleich zu der in Fig. 1b gezeigten Modulationsart eine doppelt und im Vergleich zu der in Fig. 1a gezeigten Modulationsart eine viermal so hohe Übertragungsrate erreichen. In der zugehörigen Demodulationsstufe sind dabei für die Signale unterschiedlicher Amplitude entsprechende Entscheidungsschwellen bzw. Entscheidungskriterien vorzusehen.

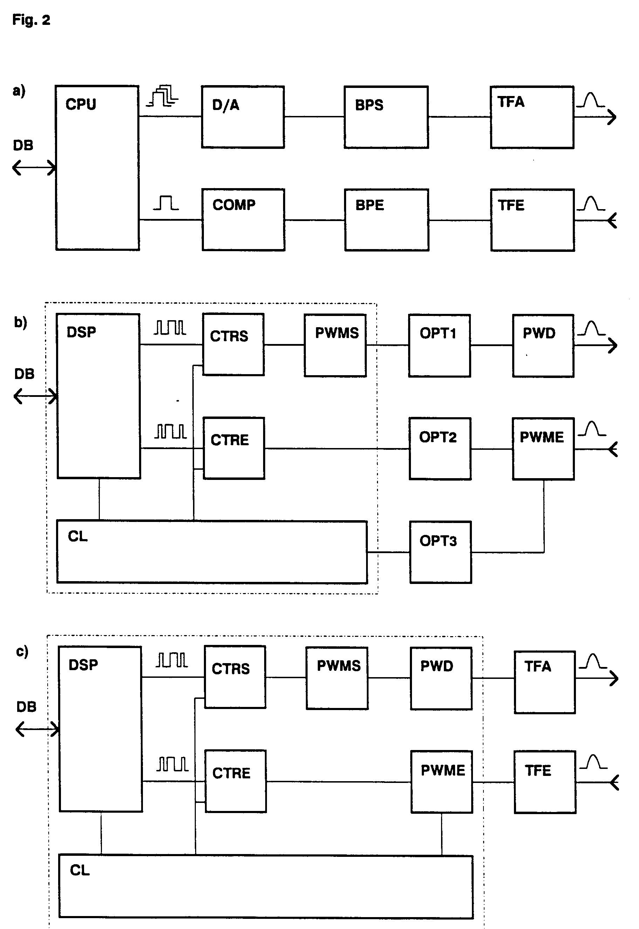

Fig. 2a zeigt eine Schaltungsanordnung, die zur Modulation und Demodulation eines Basisbandsignals vorgesehen ist. Dieser Modem ist mit einer in Fig. 2 nicht dargestellten Übertragungsleitung oder mit einem Funkgerät verbunden, das gemäss nationalen Vorschriften normalerweise nur einen Wechselspannungsein- und ausgang aufweist. Mit der beschriebenen Anordnung sind Datenübertragungen mit einer weiteren gleichartigen Anordnung möglich. Dabei ist ein bidirektionaler Datenbus DB über einen Prozessor CPU, einen Digital/Analog-Wandler D/A, ein Bandpassfilter BPS und einen Ausgangstransformator TFA mit dem Eingang und über den Prozessor CPU, einen Komparator COMP, ein weiteres Bandpassfilter BPE und einen Eingangstransformator TFE mit dem Ausgang des Funkgerätes verbunden. Über den Datenbus DB eintreffende Daten werden durch den Prozessor CPU derart in Sequenzen von Datenwörtern umgewandelt und an den Wandler D/A angelegt, dass entsprechend dem eingangs beschriebenen Verfahren für jedes Datenbit "1" alternierend eine positive bzw. negative Halbwelle am Ausgang des Wandlers D/A abgegeben wird. Bevor das erzeugte Analogsignal über den Ausgangstransformator TFA an den Wechselspannungseingang des Funkgerätes abgegeben wird, werden im Bandpassfilter BPS allfällige Oberwellen eliminiert, um die Störung benachbarter Funkkanäle zu vermeiden. Im Funkgerät erfolgt eine zum Eingangssignal proportionale Modulation des Trägersignals. Bei einer Bandbreite des Trägerkanals von z.B. 5 kHz ergibt sich eine Auslenkung von +/-2,5 kHz um die Mittenfrequenz des Trägers bei maximaler Amplitude der positiven bzw. negativen Halbwelle des Analogsignals. Vom Funkgerät empfangene Signale werden demoduliert und über den Wechselspannungsausgang an den Eingangstransformator TFE abgegeben. Nach der Filterung im Bandpassfilter BPE wird das niederfrequente Analogsignal dem Komparator COMP zugeführt, der die positiven und negativen Halbwellen des zugeführten Signals mit entsprechenden Schwellwerten vergleicht und nach Überschreiten einer der Schwellen jeweils ein Datenbit "1" an den Prozessor CPU abgibt. Nachteilig bei dieser Schaltung ist, dass die Bewertungskriterien des Komparators COMP bei verrauschtem oder gestörtem Empfang unbefriedigend sind. Falls Rauschanteile oder Störsignalspitzen die Schwellwerte überschreiten, wird vom Komparator COMP daher jeweils ein Datenbit "1" an den Prozessor CPU abgegeben. Ferner können durch den Prozessor CPU und den Wandler D/A die gewünschten Impulsformen nur relativ grob angenähert erzeugt werden, wodurch z.B. eine ungenügende Unterdrückung von Inter-Symbol-Interferenzen entstehen kann.

In Fig. 2b ist der Datenbus DB daher über einen Signalprozessor DSP, einen Zähler CTRS, einen Pulsweitenmodulator PWMS, einen Optokoppler OPT1 und einen Pulsweitendemodulator PWD mit dem Eingang und über den Signalprozessor DSP, einen weiteren Zähler CTRE, einen weiteren Optokoppler OPT2 und einen weiteren Pulsweitenmodulator PWME mit dem Ausgang des Funkgerätes verbunden. Ferner sind der Pulsweitenmodulator PWME über einen weiteren Optokoppler OPT3, der Signalprozessor DSP sowie die Zählereinheiten CTR mit einer Kontrolleinheit CL verbunden. Der digitale Signalprozessor DSP verfügt gegenüber herkömmlichen Prozessoren über eine erweiterte Busstruktur, wodurch verschiedene Operationen (Kalkulationen, Lese-und Speichervorgänge) gleichzeitig ausgeführt werden können. Derartige Prozessoren DSP, die eine enorm hohe Arbeitsgeschwindigkeit aufweisen, sind insbesondere zur Signalverarbeitung gut geeignet.

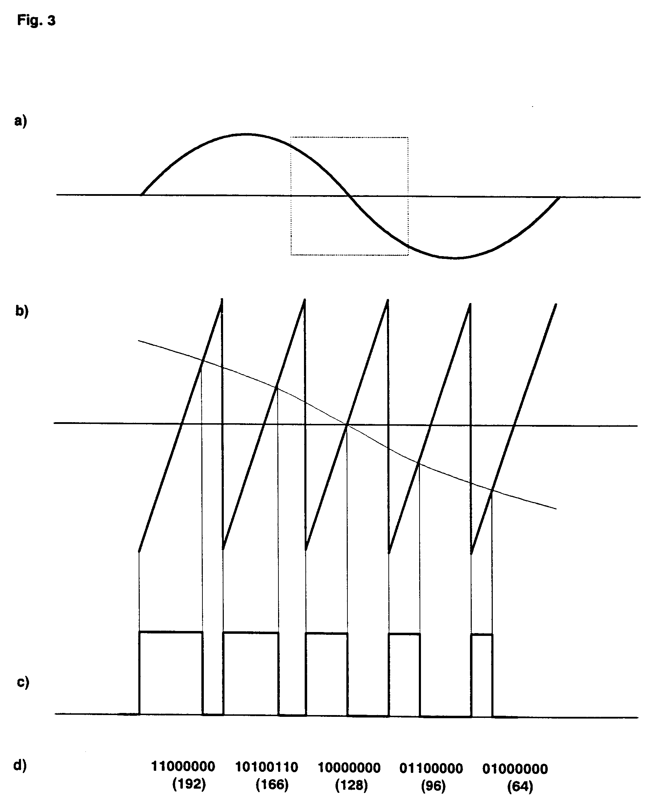

Die Funktion der Schaltungsanordnung gemäss Fig. 2b wird mit Bezug auf Fig. 3 nachfolgend näher erläutert. Entsprechend den über den Bus DB eintreffenden Daten werden periodisch vom Signalprozessor seriell oder parallel Datenwörter an den Zähler CTRS abgegeben, die bestimmen, wie hoch der Zähler jeweils laufen soll, bevor er zurückgesetzt wird. In dem dem Zähler CTRS nachgeschalteten Modulator PWMS wird das Tastverhältnis eines Rechtecksignals derart verändert, dass die Weite der Rechtecksignale bzw. die Impulsdauer immer entsprechend den vom Signalprozessor DSP abgegebenen Datenwörtern gewählt wird. D.h., die aufsteigende und abfallende Flanke des Rechteckimpulses werden jeweils beim Start- bzw. Anhaltezeitpunkt des Zählers CTRS gesetzt. Die Synchronisation des Zählers CTRS mit dem Modulator PWMS ist dabei auf verschiedene Arten möglich. Z.B. können die die Impulsweite bestimmenden Start-und Stopsignale oder nur die Stopsignale vom Zähler CTRS an den Modulator PWMS abgegeben werden. Im ersten Fall ist nur der Zähler CTRS mit einer Referenzfrequenz zu synchronisieren; ansonsten sind der Zähler CTRS und der Modulator PWMS z.B durch die Kontrolleinheit CL periodisch zu takten. Das modulierte Rechtecksignal bzw. die modulierten Impulse werden nachfolgend über den Optokoppler OPT1 an den Demodulator PWD abgegeben, der die Impulse in ein Analogsignal umwandelt. In Fig. 3d sind die vom Signalprozessor DSP abgegebenen 8-Bit-Datenwörter angegeben, durch die bestimmt wird, wie hoch der Zähler laufen soll und die bekannterweise Dezimalwerte zwischen 0 und 256 annehmen können. Bei gewünschter höherer Auflösung könnten natürlich auch 16- oder 32-Bit-Wörter vorgesehen werden. Der Zähler CTRS, der (bei 8-Bit-Wörtern) innerhalb der Periodendauer des Rechtecksignals bis maximal 256 zählen kann, zählt bis zu dem durch das Datenwort festgelegten Zählerstand. Die dabei verbrauchte Zeit entspricht dabei genau der Impulsdauer ti, wodurch die Weite der in Fig.3c dargestellten Impulse festgelegt wird. Im Demodulator PWD werden die Rechtecksignale über ein Filter (Tiefpassfilter n-ter Ordnung) gefiltert, wodurch das in Fig. 3a gezeigte Analogsignal entsteht, das vom Demodulator PWD an das Funkgerät abgegeben wird. Durch den Signalprozessor DSP lassen sich dabei beliebige Impulsformen bilden, durch die eine geringe Inter-Symbol-Interferenz erreichbar ist. Im Signalprozessor DSP ist daher eine der gewünschten Impulsform entsprechende Sequenz von 8-Bit-Datenwörtern abgelegt, die jeweils ausgelesen wird, sobald ein zu übertragendes Datenbit "1" auftritt. Für positive Impulse werden (bei 8-Bit-Datenwörtern) dabei Werte von 128 bis 256 und für negative Impulse Werte von 0 bis 128 für die Datenwörter vorgesehen.

Im Sendepfad wird die Weite der Impulse daher in Abhängigkeit von anliegenden Datenwörtern festgelegt. Im Empfangspfad erfolgt die Bestimmung der Impulsweite im Gegensatz dazu in Abhängigkeit eines vom Funkgerät abgegebenen Analogsignals. Durch einen Vergleich der in Fig. 3b gezeigten Sägezahnspannung mit dem dem Demodulator PWME vom Funkgerät zugeführten Analogsignal wird dabei die jeweilige Impulsweite ti der Rechteckimpulse festgelegt. Der Schnittpunkt beider Signale ergibt dabei jeweils die abfallende Flanke der modulierten Impulse. Die ansteigenden Flanken beider Signale (Sägezahn- und Rechtecksignal) und der Beginn des Start-bzw. Triggersignales für den nachgeschalteten Zähler CTRE sind wiederum synchronisiert. Beim Auftreten der ansteigenden Flanke des Rechteckimpulses beginnt der Zähler CTRE zu zählen und wird nach Ablauf der Impulsdauer ti durch die abfallende Flanke des Rechtecksignals angehalten. Der abgezählte Wert, der (bei 8-Bit-Datenwörtern) wiederum zwischen 0 und 256 liegt wird nachfolgend vom Zähler CTRE an den Signalprozessor DSP übergeben. Ein vom Funkgerät empfangener Impuls wird durch die beschriebene Empfangsschaltung daher in eine Sequenz von 8-Bit-Datenwörtern umgewandelt und dem Signalprozessor DSP zugeführt, der die empfangenen Datenwörter bearbeiten und auswerten kann. Durch Störungen verursachte extreme Änderungen einzelner Impulsweiten bzw. entsprechende Datenwörter lassen sich dabei ausmitteln und korrigieren. D.h., Störspitzen, die in der Komparatorschaltung COMP gemäss Fig. 2a in Datenbits "1" umgewandelt würden, verfälschen in den Schaltungen gemäss Fig. 2b und 2c normalerweise nur einen Impuls aus der gesamten Sequenz, der sich leicht korrigieren lässt. Die Fehlerhäufigkeit lässt sich durch diese Schaltungen daher wesentlich reduzieren. Dadurch wird eine Datenübertragung über grössere Distanzen oder auch bei ungünstigeren Verhältnissen möglich.

Durch die Optokoppler OPT1, OPT2 und OPT3 werden der Ein- und Ausgang des Modems gleichspannungsmässig entkoppelt.

Die Zähler CTRS und CTRE liessen sich allenfalls auch durch einen einzigen im Zeitmultiplexbetrieb arbeitenden Zähler ersetzen. Ferner besteht die Möglichkeit, die Funktionen der Zähler CTRS, CTRE und der Pulsweitenmodulationsstufe PWMS im Prozessor DSP zu integrieren. Durch die in Fig. 2b gestrichelt angezeigte Linie wird angedeutet, dass die darin enthaltenen Module CL, CTRE, CTRS und PWMS auch softwaremässig realisierbar sind.

Die Schaltungsanordnung gemäss Fig. 2c ist funktionsgleich zur Schaltungsanordnung gemäss Fig. 2b. Die gleichspannungsmässige Entkopplung des Ein- und Ausgangs des Modems erfolgt darin jedoch über zwei Transformatoren TFE und TFA.

Die Regenerierung eines Signaltaktes, mit dem jeweils eine Sequenz von Signalabtastungen bzw. von an den Signalprozessor zu übergebenden Datenwörtern ausgelöst wird, ist auf verschiedene Arten möglich. Vorteilhaft ist die Aussendung weniger Synchronisierungsimpulse, durch welche ein vorzugsweise in der Kontrolleinheit CL vorgesehener Taktgenerator angestossen wird. Zur Verhinderung des Auseinanderlaufens der Takte des Generators und der übertragenen Signale ist vorgesehen, dass der Taktgenerator mit jedem empfangenen Impuls neu angestossen wird. Damit das Auseinanderlaufen der Takte auch verhindert wird, falls eine längere Serie von Datenbits "0" übertragen wird, kann z.B. nach jedem n-ten Datenbit ein Synchronimpuls eingefügt werden.

**Patentansprüche**

1. Verfahren zur Übertragung von binären Datenfolgen über einen Nachrichtenkanal, insbesondere einen Funkkanal, von einer Nachrichtenquelle zu einer Nachrichtensenke, **dadurch gekennzeichnet,** dass eine zu übertragende Datenfolge in Datenbits und Datenbitkombinationen "1", "00", "01" oder "1", "00", "10" oder "0", "11", "01" oder "0", "11", "10" aufgeteilt wird, dass für zu übertragende Datenbits "0" bzw. "1" innerhalb eines zugehörigen Intervalls kein Impuls bzw. eine Impulslücke gebildet wird, dass für zu übertragende Datenbitkombinationen "00" bzw. "11" Impulse mit einer ersten Amplitude gebildet und innerhalb eines zugehörigen Intervalls gebildet werden, dass für zu übertragende Datenbitkombinationen "10" bzw. "01" innerhalb eines zugehörigen Intervalls Impulse mit einer zweiten Amplitude gebildet werden, dass die Polarität der für die Datenbitkombinationen "00" oder "11" sowie "10" oder "01" gebildeten Impulse stetig wechselt, dass die derart gebildeten Impulse derart über den Nachrichtenkanal übertragen werden, dass die für die Datenübertragung vorgesehene Trägerfrequenz entsprechend der Form und Amplitude der Impulse moduliert wird und dass das übertragene Signal in der Nachrichtensenke demoduliert und geprüft wird, wonach für ein Intervall mit einem Impuls ein Datenbit "0" bzw. "1" und für eine Impulslücke ein Datenbit "1" bzw. "0" erzeugt wird.

**2.** Verfahren nach Anspruch 1, **dadurch gekennzeichnet,** dass in der Nachrichtensenke mit jedem empfangenen Impuls ein Taktgenerator zurückgesetzt bzw. synchronisiert wird, durch den die Intervalle festgelegt werden, innerhalb denen die übertragenen Impulse bzw. Impulslücken auftreten.

**3.** Verfahren nach Anspruch 1 oder 2, **dadurch gekennzeichnet,** dass für die zu übertragenden Impulse sendeseitig je eine Sequenz von Datenwörtern vorgesehen ist, durch die mittels Analog/Digital-Wandlung Impulse mit vorgesehener Impulsform erzeugt werden bzw. in den Impuls umgewandelt und übertragen wird und/oder dass empfangsseitig ein übertragener Impuls in eine Sequenz von pulsweitenmodulierten Impulsen und weiter in entsprechende Datenwörter umgewandelt und an einen Signalprozessor (DSP) weitergeleitet wird, der die erhaltenen Datenwörter weiterverarbeitet und prüft, welches Datenbit oder welche Datenbitkombination dafür abzugeben ist.

**4.** Verfahren nach Anspruch 1, 2 oder 3, **dadurch gekennzeichnet,** dass die Impulse sendeseitig derart geformt werden, dass sich eine minimale Inter-Symbol-Interferenz und minimale störende Oberwellen ergeben.

**5.** Verfahren nach einem der Ansprüche 1 - 4, **dadurch gekennzeichnet,** dass das zu übertragende Trägersignal entsprechend der Signalform und Amplitude der in der Nachrichtenquelle gebildeten Impulse frequenz- oder phasenmoduliert wird.

**6.** Schaltungsanordnung zur Übertragung von binären Datenfolgen über einen Nachrichtenkanal von einer Nachrichtenquelle` die eine Sendeeinheit aufweist, zu einer Nachrichtensenke, die eine Empfangseinheit aufweist, mit einem Prozessor (CPU), der eine über einen Datenbus (DB) zugeführte und weiter zu übertragende Datenfolge gemäss dem Verfahren von Anspruch 1 oder 2 in Datenbits bzw. Datenbits und Datenbitkombinationen aufteilt, für die Impulse alternierender Polarität und gegebenenfalls unterschiedlicher Amplitude zu bilden sind, **dadurch gekennzeichnet,** dass der Prozessor (CPU) über einen Digital/Analog-Wandler (D/A), ein erstes Bandpassfilter (BPS) und einen ersten Transformator (TFA) oder über einen ersten Zähler (CTRS), einen ersten Pulsweitenmodulator (PWMS) und einen Pulsweitendemodulator (PWD) mit dem Eingang der Sendeeinheit verbunden oder verbindbar ist, in der ein Trägersignal entsprechend der Signalform und Amplitude der gebildeten Impulse modulierbar ist und dass der Prozessor (CPU) zur Abgabe von Daten an den Digital/Analog-Wandler (D/A) vorgesehen ist, in dem diese in die zu bildende Impulsform wandelbar und an das erste Bandpassfilter (BPS) übertragbar sind,

wobei für Datenbits "0" bzw. "1" Impulse und für Datenbits "1" bzw. "0" Impulslücken erzeugbar sind oder dass für Datenbits "0" bzw. "1" eine Impulslücke, für Datenbitkombinationen "00" bzw. "11" Impulse mit einer ersten Amplitude und für Datenbitkombinationen "00" bzw. "11" Impulse mit einer zweiten Amplitude erzeugbar sind und dass der die Empfangseinheit, in der die übertragenen trägerfrequenten Signale demodulierbar sind, über einen zweiten Transformator (TFE), ein zweites Bandpassfilter (BPE) sowie einen Komparator (COMP), in dem die übertragenen Impulse detektierbar sind, mit dem Prozessor (CPU) verbunden ist.

**7.** Schaltungsanordnung zur Übertragung von binären Datenfolgen über einen Nachrichtenkanal von einer Nachrichtenquelle, die eine Sendeeinheit aufweist, zu einer Nachrichtensenke, die eine Empfangseinheit aufweist, mit einem Prozessor (DSP), der eine über einen Datenbus (DB) zugeführte und weiter zu übertragende Datenfolge gemäss dem Verfahren von Anspruch 1 oder 2 in Datenbits bzw. Datenbits und Datenbitkombinationen aufteilt, für die Impulse alternierender Polarität und gegebenenfalls unterschiedlicher Amplitude zu bilden sind, **dadurch gekennzeichnet,** dass der Prozessor (DSP) über einen Digital/Analog-Wandler (D/A), ein erstes Bandpassfilter (BPS) und einen ersten Transformator (TFA) oder über einen ersten Zähler (CTRS), einen ersten Pulsweitenmodulator (PWMS) und einen Pulsweitendemodulator (PWD) mit dem Eingang der Sendeeinheit verbunden oder verbindbar ist, in der ein Trägersignal entsprechend der Signalform und Amplitude der gebildeten Impulse modulierbar ist,

dass für Datenbits "0" bzw. "1" Impulse und für Datenbits "1" bzw. "0" Impulslücken erzeugbar sind oder dass für Datenbits "0" bzw. "1" eine Impulslücke, für Datenbitkombinationen "00" bzw. "11" Impulse mit einer ersten Amplitude und für Datenbitkombinationen "00" bzw. "11" Impulse mit einer zweiten Amplitude erzeugbar sind, dass vom Prozessor (DSP) entsprechende Daten an den ersten Zähler (CTRS) übertragbar sind, durch den das Tastverhältnis des vom ersten Pulsweitenmodulator (PWMS) abgegebenen Rechtecksignals bestimmbar ist, das im Pulsweitendemodulator (PWD) in die zu bildenden Impulse umwandelbar ist und dass der Ausgang der Empfangseinheit, in dem die übertragenen trägerfrequenten Signale demodulierbar sind, mit einem zweiten Pulsweitenmodulator (PWME) verbunden ist, in dem in Abhängigkeit der übertragenen Impulse ein moduliertes Rechtecksignal erzeugbar ist, durch das ein zweiter Zähler (CTRE), dessen Zählerstände dem vorzugsweise als Signalprozessor ausgebildeten Prozessor (DSP) gemeldet werden, jeweils start- oder rücksetzbar ist.

**8.** Schaltungsanordnung nach Anspruch 6 oder 7, **dadurch gekennzeichnet,** dass ein Zugriff des Prozessors (CPU, DSP) zu einem Modul vorgesehen ist, in dem Vorschriften über die Berechnung der an den Digital/Analog-Wandler (D/A) bzw. den ersten Zähler (CTRS) abzugebenden Sequenzen von Datenwörtern abgelegt sind.

**9.** Schaltungsanordnung nach Anspruch 6, 7 oder 8, **dadurch gekennzeichnet,** dass die Sende- und Empfangseinheit Bestandteil eines Funkgerätes sind, das zumindest einen Trägerkanal mit vorzugsweise frequenz- oder phasenmodulierbarer Trägerfrequenz aufweist.

## Claims

**1.** Method for transmitting binary data sequences by way of a message channel, in particular a radio channel, from a message source to a message sink, characterized in that a data sequence which is to be transmitted is divided into data bits and data bit combinations "1", "00", "01" or "1", "00", "10" or "0", "11", "01" or "0", "11", "10", in that no pulse or a pulse gap is formed for data bits "0" or "1", which are to be transmitted, within an associated interval, in that for data bit combinations "00" and "11" to be transmitted, pulses with a first amplitude are formed and are formed within an associated interval, in that for data bit combinations "10" and "01" to be transmitted, pulses with a second amplitude are formed within an associated interval, in that the polarity of the pulses formed for the data bit combinations "00" or "11" and "10" or "01" constantly changes, in that the pulses formed in this way are transmitted by way of the message channel in such a way that the carrier frequency provided for the data transmission is modulated according to the shape and amplitude of the pulses and in that the transmitted signal is demodulated in the message sink and is examined, after which a data bit "0" or "1" is generated for an interval with a pulse and a data bit "1" or "0" is generated for a pulse gap.

**2.** Method according to claim 1, characterized in that in the message sink with each received pulse a clock-pulse generator is reset or synchronized, by means of which the intervals are established, within which the transmitted pulses and pulse gaps occur.

**3.** Method according to claim 1 or 2, characterized in that for the pulses to be transmitted, on the transmitting side in each case a sequence of data words is provided, by means of which pulses with provided pulse shape are generated by means of analog/digital conversion or converted into the pulse and transmitted and/or in that on the receiving side a transmitted pulse is converted into a sequence of pulse-width modulated pulses and further converted into corresponding data words and relayed to a signal processor (DSP) which processes further the received data words and examines which data bit or which data bit combination is to be emitted for this purpose.

**4.** Method according to claim 1, 2 or 3, characterized in that the pulses on the transmitting side are shaped in such a way that minimum inter-symbol interference and minimum disturbing harmonic waves are produced.

**5.** Method according to one of claims 1 to 4, characterized in that the carrier signal to be transmitted is frequency-modulated or phase-modulated according to the signal form and amplitude of the pulses formed in the message source.

**6.** Circuit arrangement for the transmission of binary data sequences by way of a message channel from a message source, which has a transmitting unit, to a message sink, which has a receiving unit, having a processor (CPU) which divides a data sequence, supplied by way of a data bus (DB) and to be transmitted further, according to the method of claim 1 or 2, into data bits or data bits and data bit combinations, for which pulses of alternating polarity and optionally variable amplitude are to be formed, characterized in that the processor (CPU) is connected to or can be connected to the input of the transmitting unit by way of a digital/analog converter (D/A), a first bandpass filter (BPS) and a first transformer (TFA) or by way of a first counter (CTRS), a first pulse-width modulator (PWMS) and a pulse-width demodulator (PWD), in which transmitting unit a carrier signal can be modulated according to the signal form and amplitude of the formed pulses, and in that the processor (CPU) is provided for the emission of data to the digital/analog converter (D/A), in which it can be converted into the pulse shape to be formed and can be transmitted to the first bandpass filter (BPS), wherein pulses can be generated for data bits "0" and "1" and pulse gaps can be generated for data bits "1" and "0", or in that for data bits "0" and "1" a pulse gap can be generated, for data bit combinations "00" and "11" pulses with a first amplitude can be generated and for data bit combinations "00" and 11" pulses with a second amplitude can be generated, and in that the receiving unit in which the transmitted carrier-frequency signals can be demodulated is connected to the processor (CPU) by way of a second transformer (TFE), a second bandpass filter (BPE) and a comparator (COMP) in which the transmitted pulses can be detected.

7. Circuit arrangement for the transmission of binary data sequences by way of a message channel from a message source, which has a transmitting unit, to a message sink, which has a receiving unit, having a processor (DSP) which divides a data sequence, supplied by way of a data bus (DB) and to be transmitted further, according to the method of claim 1 or 2, into data bits or data bits and data bit combinations, for which pulses of alternating polarity and optionally variable amplitude are to be formed, characterized in that the processor (DSP) is connected or can be connected to the input of the transmitting unit by way of a digital/analog converter (D/A), a first bandpass filter (BPS) and a first transformer (TFA) or by way of a first counter (CTRS), a first pulse-width modulator (PWMS) and a pulse-width demodulator (PWD), in which transmitting unit a carrier signal can be modulated according to the signal form and amplitude of the formed pulses, in that pulses can be generated for data bits "0" and "1" and pulse gaps can be generated for data bits "1" and "0", or in that for data bits "0" and "1" a pulse gap can be generated, for data bit combinations "00" and "11" pulses with a first amplitude can be generated and for data bit combinations "00" and "11" pulses with a second amplitude can be generated, in that corresponding data can be transmitted by the processor (DSP) to the first counter (CTRS), by means of which counter the pulse duty factor of the square wave signal emitted by the first pulse-width modulator (PWMS) can be determined, which can be converted in the pulse-width demodulator (PWD) into the pulses to be formed, and in that the output of the receiving unit in which the transmitted carrier-frequency signals can be demodulated is connected to a second pulse width modulator (PWME), in which, in dependence upon the transmitted pulses, a modulated square wave signal can be generated, by means of which a second counter (CTRE), the counts of which are signalled to the processor (DSP), preferably constructed as signal processor, can be respectively started or reset.

8. Circuit arrangement according to claim 6 or 7, characterized in that an access of the processor (CPU, DSP) to a module is provided, in which specifications about the calculation of the sequences of data words to be emitted to the digital/analog converter (D/A) or the first counter (CTRS) are deposited.

9. Circuit arrangement according to claim 6, 7 or 8, characterized in that the transmitting and receiving unit are component parts of a radio apparatus which has at least one carrier channel with carrier frequency which can preferably be frequency-modulated or phase-modulated.

**Revendications**

1. Procédé de transmission de séquences de données binaires par l'intermédiaire d'un canal d'information, notamment d'un canal radio, d'une source d'informations à un destinataire d'informations, caractérisé en ce qu'une séquence de données à transmettre est subdivisée en bits de données et en combinaisons de bits de données "1", "00", "01" ou "1", "00", "10" ou "0", "11", "01" ou "0", "11", "10", en ce que, pour des bits de données "0" et "1" à transmettre pendant un intervalle associé, il n'est pas formé d'impulsion ou de vide d'impulsion, en ce que, pour des combinaisons de bits de données "00" et "11" à transmettre il est formé pendant un intervalle de temps associé des impulsions ayant une première amplitude, en ce que, pour des combinaisons de bits de données "10" et "01" à transmettre il est formé pendant un intervalle associé des impulsions ayant une deuxième amplitude, en ce que la polarité des impulsions formées pour les combinaisons de bits de données "00" ou "11" ainsi que "10" ou "01" est inversée en permanence, en ce que les impulsions ainsi formées sont transmises par l'intermédiaire du canal d'informations de telle manière que la fréquence porteuse prévue pour la transmission de données est modulée suivant la forme et l'amplitude des impulsions et que le signal transmis est démodulé et contrôlé dans le destinataire d'informations, un bit de donnée "0" et "1" étant produit pour un intervalle ayant une impulsion et un bit de données "1" et "0" étant produit pour un vide d'impulsion.

2. Procédé suivant la revendication 1, caractérisé en ce que, dans le destinataire d'informations, il est remis à l'état initial ou synchronisé à chaque impulsion reçue un générateur d'impulsions de synchronisation, par lequel sont fixés les intervalles pendant lesquels les impulsions et les vides d'impulsions transmis apparaissent.

3. Procédé suivant la revendication 1 ou 2, caractérisé en ce qu'il est prévu pour les impulsions à transmettre, côté émission, chaque fois une séquence de mots de données par laquelle des impulsions ayant une forme d'impulsion prévue sont produites au moyen d'une conversion analogique/numérique et convertie et transmise en l'impulsion et/ou en ce que, côté réception, une impulsion transmise est convertie en une séquence d'impulsions modulées en longueur d'impulsion et ensuite en mot de donnée correspondant et retransmise à un processeur DSP de signal qui traite ultérieurement les mots de données reçus et contrôle le bit de donnée ou la combinaison de bits de données qui est à fournir à cet effet.

4. Procédé suivant la revendication 1, 2 ou 3, caractérisé en ce que les impulsions sont mises en forme côté émission de manière à avoir une interférence intersymboles minimum et des harmoniques parasites minimum.

5. Procédé suivant l'une des revendications 1 à 4, caractérisé en ce que le signal de porteuse à transmettre est modulé en fréquence ou en phase suivant la forme du signal et l'amplitude des impulsions formées dans la source d'information.

6. Montage pour transmettre des séquences de données binaires par l'intermédiaire d'un canal d'informations d'une source d'informations, qui comporte une unité d'émission, à un destinataire d'informations, qui comporte une unité de réception, comportant un processeur (CPU) qui subdivise une séquence de données à envoyer par l'intermédiaire d'un bus (DB) de données et à transmettre ultérieurement, suivant le procédé de la revendication 1 ou 2, en bits de données ou en bits de données et en combinaison de bits de données pour lesquelles il faut former des impulsions de polarité alternée et le cas échéant d'amplitude différente, caractérisé en ce que le processeur (CPU) est relié ou peut être relié à l'entrée de l'unité d'émission par l'intermédiaire d'un convertisseur (D/A) numérique/analogique, d'un premier filtre (BPS) passe bande et d'un premier transformateur (TFA) ou par l'intermédiaire d'un premier compteur (CTRS), d'un premier modulateur (PWMS) de longueur d'impulsion et d'un démodulateur (PWD) de longueur d'impulsion, un signal de porteuse pouvant être modulé dans l'unité d'émission de manière correspondante à la forme de signal et à l'amplitude des impulsions formées, et en ce que le processeur (CPU) est prévu pour fournir des données au convertisseur (D/A) numérique/analogique dans lequel ces données peuvent être converties en la forme d'impulsion à former et transmises au premier filtre (BPS) passe bande,

des impulsions pouvant être produites pour des bits de données "0" et "1" et des vides d'impulsions pouvant être produits pour des bits de données "1" et "0", ou en ce qu'il peut être formé un vide d'impulsion pour des bits de données "0" et "1", des impulsions ayant une première amplitude pour des combinaisons de bits de données "00" et "11" et des impulsions ayant une deuxième amplitude pour des combinaisons de bits de données "00" et "11",
et en ce que l'unité de réception dans laquelle les signaux de fréquence porteuse transmis peuvent être démodulés est reliée au processeur (CPU) par l'intermédiaire d'un deuxième transformateur (TFE), d'un deuxième filtre (BPE) passe bande ainsi que par l'intermédiaire d'un comparateur (COMP) dans lequel les impulsions transmises peuvent être détectées.

7. Montage pour la transmission de séquences de données binaires par l'intermédiaire d'un canal d'informations d'une source d'informations, qui comporte une unité d'émission, à un destinataire d'informations, qui comporte une unité de réception, comportant un processeur (DSP) qui subdivise une séquence de données à envoyer par l'intermédiaire d'un bus (DB) de données et à transmettre ultérieurement, suivant le procédé de la revendication 1 ou 2, en bits de données ou en bits de données et en combinaison de bits de données pour lesquelles des impulsions de polarité alternées et le cas échéant d'amplitude différentes sont à former, caractérisé en ce que le processeur (DSP) est relié ou peut être relié à l'entrée de l'unité d'émission par l'intermédiaire d'un convertisseur (D/A) numérique/analogique, d'un premier filtre (BPS) passe bande et d'un premier transformateur (TFA) ou par L'intermédiaire d'un premier compteur (CTRS), d'un premier modulateur (PWMS) de longueur d'impulsion et d'un démodulateur (PWD) de longueur d'impulsion, un signal de porteuse pouvant être modulé dans l'unité d'émission de manière correspondante à la forme de signal et à l'amplitude des impulsions formées,

en ce qu'il peut être produit des impulsions pour des bits de données "0" et "1", des vides d'impulsions pour des bits de données "1" et "0", ou en ce qu'il peut être produit un vide d'impulsions pour des bits de données "0" et "1", des impulsions ayant une première amplitude pour des combinaisons de bits de données "00" et "11" et des impulsions ayant une deuxième amplitude pour des combinaisons de bits de données "00" et "11", des données correspondantes du processeur (DSP) pouvant être transmises au premier compteur (CTRS) par lequel le rapport cyclique du signal rectangulaire fourni par le premier modulateur (PWMS) de longueur d'impulsion peut être déterminé, le signal rectangulaire pouvant être converti dans le démodulateur (PWD) de longueur d'impulsion en les impulsions à former, et la sortie de l'unité de réception, dans laquelle les signaux de fréquence porteuse transmis peuvent être démodulés, étant reliée à un deuxième modulateur (PWME) de longueur d'impulsion dans lequel il peut être produit en fonction des impulsions transmises un signal rectangulaire modulé par lequel un deuxième compteur (CRTE) dont les états de compteur sont signalés au processeur (DSP), réalisé de préférence en processeur de signal, peut être démarré ou remis à l'état initial.

8. Montage suivant la revendication 6 ou 7, caractérisé en ce qu'il est prévu un accès du processeur (CPU, DSP) à un module dans lequel sont mémorisées des prescriptions concernant le calcul des séquences de mots de données à fournir au convertisseur (D/A) numérique/analogique et au premier compteur (CTRS).

9. Montage suivant la revendication 6, 7 ou 8, caractérisé en ce que l'unité d'émission et l'unité de réception font partie d'un appareil de radiocommunication qui comporte au moins une voie porteuse ayant de préférence une fréquence porteuse qui peut être modulée en fréquence ou en phase.

**Fig. 1**

a)

1 1 0 1 0 1 0 0 1 1 1 0 0

$t_t$   $t_h$   $t_t$

b)

1 1 0 1 0 1 0 0 1 1 1 0 0

c)

11 0 10 10 0 11 10 0

11   11   10   10   00   0

**Fig. 2**

a)

CPU ⊓⊔ D/A → BPS → TFA →

DB ↔

⊓ COMP → BPE → TFE ←

b)

DSP ⊓⊔⊔ CTRS → PWMS → OPT1 → PWD →

DB ↔

⊓⊔⊔ CTRE → OPT2 → PWME ←

CL → OPT3

c)

DSP ⊓⊔⊔ CTRS → PWMS → PWD → TFA →

DB ↔

⊓⊔⊔ CTRE → PWME → TFE ←

CL

**Fig. 3**

a)

b)

c)

d)

| 11000000 | 10100110 | 10000000 | 01100000 | 01000000 |
|----------|----------|----------|----------|----------|
| (192) | (166) | (128) | (96) | (64) |